# EUROPEAN PATENT SPECIFICATION

(11) **EP 1 969 040 B1**
(45) Date of publication and mention of the grant of the patent: **25.07.2012**
(21) Application number: 05806684.6
(22) Date of filing: 23.11.2005
(51) Int. Cl.: C08J 7/04, B29C 71/00

(54) **METHOD FOR PRODUCING COLOURED POLYMER GRANULATE**
VERFAHREN ZUR HERSTELLUNG VON GEFÄRBTEM POLYMERGRANULAT
PROCÉDÉ SERVANT À PRODUIRE DES GRANULÉS DE POLYMÈRE COLORÉS

(43) Date of publication of application: 17.09.2008
(73) Proprietor: Controlled Polymers A/S, 6760 Ribe (DK)
(72) Inventor: FLENSBURG, Anders, 6760 Ribe (DK)
(74) Representative: Gregersen, Niels Henrik
(86) International application number: PCT/DK2005/000749
(87) International publication number: WO 2007/059767

(56) References cited:
- DE-A1-102004 015 456
- DE-A1-102004 015 456
- US-A- 5 431 697

## Description

### Field of the invention

The present invention relates to a method for producing polymer granulates in specific colours and with specific abilities in a new manner without affecting the molecular structure of the polymer material in question.

### Background of the invention

In the plastic industry, polymer granulates are being compounded for applying colours and additives to the plastic or polymers. The process previously used for this is a mixing of colorants and additives into the plastic material through melting down the polymer matrix and mixing it together.

The disadvantages are the possibility of thermal degeneration, risk of contamination, energy cost and difficulties in making a narrow specification on the product.

DE-10 2004 015 456-A1 discloses a plastic moulded body comprising a polymer phase formed from a hardenable reaction mass and plastic granules incorporated therein. The granules consist of at least one resin material, first filling materials and first colour pigments, and respectively comprise at least one surface layer covering the entire surface thereof and consisting of one polymer. The invention also discloses plastic granules for plastic moulded bodies used in sanitation.

### Purpose of the invention

The object of the invention is to provide a new and improved method of the type introductory mentioned which in a simple and cheap manner enables attaining a new and improved production method by which is achieved technical, materially, economic advantages as well as advantages in use.

### Brief description of the invention

The method according to the invention is characterized in that a lacquer in the form of colour pigments or additives dissolved in a polyvinylbutyral (PVB) solution in ethanol is applied to ABS granules or other similar granules by mixing and that said ethanol afterwards is dried away.

By proper controlling the amount of colorants or additives in accordance with the present amount of polymer granulate it may hereby be achieved that every single granule is covered with the needed colorant or additive in order to obtain the predetermined properties of the polymer granulate in question. Finally said colorants and additives are fixed to the surfaces of the polymer granulate by drying or evaporation of the soluble agent.

The method according to invention may be further modified in such a manner, that use is made of said lacquer in the form of colour pigments or additives dispersed in a melted PE wax, that said lacquer is applied to PP granulate or other similar granules by spraying, and that said granular material afterwards is cooled down to attain a homogenous layer of colorants or additives.

The method according to the invention may be still further modified in such a manner, that use is made of said lacquer in the form of colour pigments or additives dissolved in a polyvinylbutyral (PVB) solution in ethanol, that said lacquer is applied to ABS granulate or other similar granules by spray coating under the evaporation of the solvent.

The method according to the invention may be still further modified in such a manner, that the mixing of the mixture of polymer granulate and colorants and/or additives is carried out by means of an agitator mixer.

And in a particular embodiment of the method according to the invention use is made of an ordinary concrete mixer of the type comprising a mixing receptacle being able to tilt for emptying out the finished mixture.

The method according to the invention may be still further modified in such a manner, that use is made of said lacquer in the form of colour pigments or additives dissolved in a thermo plastic binding agent or glue, that said lacquer is applied to polymer granulate by mixing in a mixer and that the mixture is dried during the mixing as hot air being supplied to the inside of the mixer.

By the method according to the invention it may be advantageous to make use of polymer granulate being reinforced by means of glass fibres.

The method according to the invention may be still further modified in such a manner, that use is made of polymer granulate the surface of which is coated with a binding agent in order to improve the adhesive properties thereof.

Alternatively, the method according to invention may be modified in such a manner, that use is made of polymer granulate the surface of which is affected with a suitable treatment in order to improve the adhesive properties thereof by making said surface rougher.

Another possible treatment of the surfaces of the granules may be obtained by a corona treatment, whereby the surfaces of each single granule may be opened to improve the adhesive properties thereof.

A still further possibility is to apply a primer to the surface of the granules by way of example in the form of dynasylan or a similar primer to improve the adhesive properties of the granulate.

### Detailed description of the invention

According to the method of the invention it is the idea to "coat" every single granule with the right amount of colorant and/or additive, and use the afterwards processing by the end user as a fmishing and fixing process through melting down the polymer matrix and mixing it together.

By using the right formulation concerning colorants, additives and polymer granulate, the method according to the invention will ensure a perfect distribution of said colorants and or additives at a minimal affecting of the molecular structure of the polymer material in question.

The invention is in the following explained in more detail with reference to the examples below:

### Example 1

A lacquer made by dissolving colour pigments and/or additives in a PVB solution in ethanol is applied to ABS granulate by mixing and afterwards drying away the ethanol. Hereby is achieved a homogeneous colouring or coating on the surface and the outer layers of the granules.

### Example 2

A lacquer made by melting a PE wax and dispersing colour pigment and/or additives herein is applied to a PP granulate by spraying and after cooling down a homogeneous layer of colorant and additives is attained.

### Example 3

A lacquer made by dissolving colour pigments and/or additives in a PVB solution in Ethanol is applied to ABS granulate by spray coating under the evaporation of the solvent agent. In this manner a homogeneous colouring is attained on the surface and the outer layer of the granules.

By experiments it has appeared that by using the method according to the invention, a much narrower specification on the applied colorants and additives may be obtained, and furthermore the mechanical properties of the polymer material may be maintained as no thermal degeneration at all occurs.

It should be mentioned that the method according to the invention may be carried out by other mixing means or apparatuses by way of example may be used an ordinary dragée pan of the type being used at the production of dragées, sweets or other coated items.

Finally it should be indicated that within the scope of the invention the polymer granules mentioned in the claims as well as in the examples may be from other groups of polymers such as PA (polyamid) e.g. Ultramid, PA-gf (glass filled), PBT (polybutylterephthalat) e.g. Ultradur, PBT-gf, PC (polycarbonate) e.g. Lexan, PC-gf, ABS (acrylonitrilbutadienstyrene) e.g. Novodur, ABS-gf, PC/ABS, PC/ABS-gf, PES (polyethersulfone), PES-gf, PSU (polysulfone), PSU-gf, PEEK (polyetheretherketone), PEEK-gf, LCP (liquidcrystalpolymers) e.g. Vectra, LCP-gf, PP (polypropylene) e.g. Hostacom, PP-gf, PP-mf (mineral filled), POM (polyoxymethylene) e.g. Hostaform, POM-gf or other similar polymer granules. Regarding the mentioned "lacquer" or glue it should be indicated that use may be made of other glue components such as ketone or aldehyde recins or even other types of suitable glue components.

## Claims

1. A method for producing polymer granules in specific colours and with specific abilities without affecting the molecular structure of the polymer material in question, **characterized in, that** a lacquer in the form of colour pigments or additives dissolved in a polyvinylbutyral (PVB) solution in ethanol is applied to ABS granules or other similar granules by mixing and that said ethanol afterwards is dried away.

2. A method according to claim 1, **characterized in, that** use is made of said lacquer in the form of colour pigments or additives dissolved in a polyvinylbutyral (PVB) solution in ethanol, and that said lacquer is applied to ABS granules or other similar granules by spray coating under the evaporation of the solvent.

3. A method according to claim 1, **characterized in, that** the mixing of the mixture of polymer granules and colorants or additives is carried out by means of an agitator mixer.

4. A method according to claim 3, **characterized in, that** use is made of a concrete mixer of the type comprising a mixing receptacle being able to tilt for emptying out the finished mixture.

5. A method according to claim 1, **characterized in, that** use is made of said lacquer in the form of colour pigments or additives dissolved in a thermo plastic binding agent or glue, that said lacquer is applied to polymer granules by mixing in a mixer and that the mixture is dried during the mixing as hot air being supplied to the inside of the mixer.

6. A method according to claim 1, **characterized in, that** use is made of polymer granules being reinforced by means of glass fibres.

7. A method according to claim 1, **characterized in, that** use is made of polymer granules the surface of which is coated with a binding agent in order to improve the adhesive properties thereof.

8. A method according to claim 1, **characterized in, that** use is made of polymer granules the surface of which is provided with a suitable treating in order to improve the adhesive properties thereof by making said surface rougher.

## Patentansprüche

1. Verfahren zum Herstellen von Polymerkörnchen mit spezifischen Farben und spezifischen Fähigkeiten ohne Beeinträchtigung der Molekülstruktur des betreffenden Polymermaterials, **dadurch gekennzeichnet, dass** ein Lack in Form von in Polyvinylbutyral- (PVB-) Lösung in Ethanol gelösten Farbpigmenten oder Zusatzstoffen die ABS-Körnchen oder andere ähnliche Körnchen durch Mischung aufgetragen wird, und dass das Ethanol nachher abgetrocknet wird.

2. Verfahren nach Anspruch 1, **dadurch gekennzeichnet, dass** der Lack in Form von in Polyvinylbutyral- (PVB-) Lösung in Ethanol gelöste Farbpigmente oder Zusatzstoffe verwendet wird, und dass der genannte Lack durch Spritzen unter Verdampfung des Lösungsmittels die ABS-Körnchen oder andere ähnliche Körnchen aufgetragen wird.

3. Verfahren nach Anspruch 1, **dadurch gekennzeichnet, dass** die Mischung aus Polymerkörnchen und Farbmitteln oder Zusatzstoffen durch einen Rührwerksmischer durchgemischt wird.

4. Verfahren nach Anspruch 3, **dadurch gekennzeichnet, dass** eine Betonmischmaschine von dem Typ, der einen fürs Ausleeren der fertiggemischten Mischung kippbaren Mischbehälter aufweist, verwendet wird.

5. Verfahren nach Anspruch 1, **dadurch gekennzeichnet, dass** der Lack in Form von in einem thermoplastischen Bindemittel oder Klebstoff gelösten Farbpigmenten oder Zusatzstoffen verwendet wird, dass der genannte Lack durch Mischen in einer Mischmaschine die Polymerkörnchen aufgetragen wird, und dass die Mischung während des Mischens durch das Einleiten von Heißluft in das Innere der Mischmaschine getrocknet wird.

6. Verfahren nach Anspruch 1, **dadurch gekennzeichnet, dass** glasfaserverstärkte Polymerkörnchen verwendet werden.

7. Verfahren nach Anspruch 1, **dadurch gekennzeichnet, dass** Polymerkörnchen verwendet werden, deren Oberfläche zum Verbessern der Hafteigenschaften mit einem Bindemittel belegt wird.

8. Verfahren nach Anspruch 1, **dadurch gekennzeichnet, dass** Polymerkörnchen verwendet werden, deren Oberfläche zum Verbessern der Hafteigenschaften eine geeignete Behandlung durch Aufrauhung der Oberfläche unterworfen wird.

## Revendications

1. Procédé servant à produire des granulés de polymère dans des couleurs spécifiques et avec des qualités spécifiques sans entamer la structure moléculaire de la matière polymère en question, **caractérisé en ce qu'**une laque sous forme de pigments colorés ou des additifs dissous dans une solution de polyvinylbutyral (PVB) en éthanol est appliquée sur des granulés de acrylonitrile-butadiène-styrène (ABS) ou d'autres granulés similaires par mélange et que ledit éthanol par la suite est desséché.

2. Procédé selon la revendication 1, **caractérisé en ce que** l'on utilise ladite lacque sous forme de pigments colorés ou des additifs dissous dans une solution de polyvinylbutyral (PVB) en éthanol, que ladite laque est appliquée sur des granulés de acrylonitrile-butadiène-styrène ou d'autres granulés similaires par enduction par pulvérisation sous l'évaporation du solvant.

3. Procédé selon la revendication 1, **caractérisé en ce que** le mélange du composé des granulés de polymères et des colorants ou additifs est effectué au moyen d'un agitateur-mélangeur.

4. Procédé selon la revendication 3, **caractérisé en ce que** l'on utilise un malaxeur à béton du type comportant un récipient à mélanger étant apte de basculer pour vider le mélange fini.

5. Procédé selon la revendication 1, **caractérisé en ce que** l'on utilise ladite laque sous forme de pigments colorés ou d'additifs dissous dans un agent liant thermoplastique ou une colle, que ladite laque est appliquée sur des granulés de polymères par mélange dans un mélangeur et que le mélange est seché pendant le mélange puisque de l'air chaud étant alimenté dans l'intérieur du mélangeur.

6. Procédé selon la revendication 1, **caractérisé en ce que** l'on utilise des granulés de polymère étant renforcés par des fibres de verre.

7. Procédé selon la revendication 1, **caractérisé en ce que** l'on utilise des granulés de polymère dont la surface est revêtue d'un agent liant pour améliorer ses propriétés adhésives.

8. Procédé selon la revendication 1, **caractérisé en ce que** l'on utilise des granulés de polymère dont la surface est pourvue d'un traitement convenable pour améliorer ses propriétés adhésives en faisant ladite surface plus rugueuse.
